# EUROPÄISCHE PATENTSCHRIFT

(11) **EP 4 025 376 B1**
(45) Veröffentlichungstag und Bekanntmachung des Hinweises auf die Patenterteilung: **28.08.2024**
(21) Anmeldenummer: 19778431.7
(22) Anmeldetag: 06.09.2019
(51) Int. Cl.: B23K 26/346, B23K 20/10

(54) **SCHWEISSEINRICHTUNG UND VERFAHREN ZUM VERSCHWEISSEN WENIGSTENS ZWEIER KOMPONENTEN**
WELDING DEVICE AND METHOD FOR WELDING AT LEAST TWO COMPONENTS
DISPOSITIF DE SOUDAGE ET PROCÉDÉ DE SOUDAGE D'AU MOINS DEUX COMPOSANTS

(43) Veröffentlichungstag der Anmeldung: 13.07.2022
(73) Patentinhaber: Schunk Sonosystems GmbH, 35435 Wettenberg (DE)
(72) Erfinder: TRUBE, Stefan, 35435 Wettenberg (DE); GALIC, Ivica, 56295 Rüber (DE)
(74) Vertreter: Qip Patentanwälte Dr. Kuehn & Partner mbB
(86) Internationale Anmeldenummer: PCT/EP2019/073835
(87) Internationale Veröffentlichungsnummer: WO 2021/043418

(56) Entgegenhaltungen:
- EP-A1- 0 423 433
- CN-A- 105 414 763
- CN-A- 107 570 872
- CN-A- 108 326 429
- DE-T5- 112013 003 961
- JP-A- H10 230 378
- ATHASSIOS KALIUDIS: "Grüne Welle fürs Kupferschweißen | TRUMPF", 7 September 2017 (2017-09-07), XP055703370, Retrieved from the Internet <URL:https://www.trumpf.com/de_DE/magazin/gruene-welle-fuers-kupferschweissen/> [retrieved on 20200610]

## Beschreibung

### GEBIET DER ERFINDUNG

Die vorliegende Erfindung betrifft eine Schweißeinrichtung und ein Verfahren zum Verschweißen wenigstens zweier Komponenten.

### HINTERGRUND DER ERFINDUNG

Für verschiedenste technische Anwendungen kann es notwendig sein, zwei Komponenten fest miteinander zu verbinden. Beispielsweise müssen im Rahmen einer Fertigung von Batteriezellen im Regelfall mehrere dünne metallische Folien miteinander und/oder mit metallischen Blechen elektrisch gut leitend sowie mechanisch zuverlässig verbunden werden.

Um eine feste und mechanisch hoch belastbare Kopplung zwischen zwei Komponenten zu bilden, können diese beispielsweise stoffschlüssig miteinander verbunden werden. Eine stoffschlüssige Verbindung kann insbesondere durch Verschweißen der beiden Komponenten miteinander erzeugt werden.

Es sind verschiedene Technologien bekannt, die eingesetzt werden können, um Komponenten aus gleichen Materialien oder auch aus unterschiedlichen Materialien miteinander verschweißen zu können. Jede dieser Technologien kann bestimmte Randbedingungen erfordern und/oder bestimmte Vor- und Nachteile mit sich bringen.

Beispielsweise ist bekannt, dass Komponenten durch sogenanntes Reibschweißen miteinander verbunden werden können. Dabei werden die als Fügepartner dienenden Komponenten an einer Grenzfläche zwischen den beiden Komponenten aneinander gerieben. Abhängig von Randbedingungen wie beispielsweise einem beim Reiben ausgeübten Druck und/oder einem Ausmaß bzw. einer Geschwindigkeit, mit der die beiden Komponenten während des Reibens relativ zueinander verlagert werden, stellt sich dabei eine stoffschlüssige Verbindung zwischen den Komponenten ein.

Als spezielle Ausprägung des Reibschweißens ist das sogenannte Ultraschallschweißen bekannt. Dabei werden die, auch als Schweißgut bezeichneten, zu verschweißenden Komponenten als Fügepartner mit Oberflächen aneinander in Anlage gebracht und unter geringem Druck und hochfrequenten mechanischen Schwingungen gegeneinander bewegt. Die Schwingungen können hierbei mithilfe einer Sonotrode erzeugt werden, in der Ultraschallschwingungen mit Frequenzen von typischerweise 20 kHz bis 50 kHz erzeugt und auf wenigstens einen der Fügepartner übertragen werden. Ultraschallschweißen kann dabei sowohl zum Verschweißen von metallischen Fügepartnern als auch zum Verschweißen von Fügepartnern aus anderen Materialien, insbesondere aus Kunststoff, eingesetzt werden. Beim Ultraschallschweißen von Metallen werden die Schwingungen im Regelfall horizontal zu den Fügepartnern, d.h. parallel zu den miteinander zu verschweißenden Oberflächen, eingeleitet, so dass diese aneinander reiben. Die Verbindung entsteht beispielsweise nach einem Abscheren von Rauhigkeitsspitzen und/oder einem Aufbrechen einer Oxidschicht im Wesentlichen durch ein oberflächennahes Ineinanderverzahnen und/oder Ineinanderverhaken der Fügepartner. Dies geschieht im Allgemeinen durch plastisches Fließen, ohne dass die Materialien notwendigerweise schmelzen. Dies kann insbesondere beim Verschweißen von Folien, dünnen Blechen und/oder Drähten vorteilhaft sein. Neben punktförmigen Schweißungen sind mit abrollenden Sonotroden auch Nahtschweißungen möglich. Ultraschallschweißen ist weiterhin durch oft sehr geringe Schweißzeiten und hohe Wirtschaftlichkeit gekennzeichnet. Es lassen sich unterschiedliche Materialien miteinander verbinden. Die zu verschweißenden Komponenten werden typischerweise nur im Schweißbereich geringfügig erwärmt, sodass das umliegende Material meist nicht geschädigt wird.

Als weitere Schweißtechnologie ist Laserschweißen, manchmal auch als Laserstrahlschweißen bezeichnet, bekannt. Das Laserschweißen wird in der Regel, ähnlich wie beim Reibschweißen, ohne Zuführung eines Zusatzwerkstoffes ausgeführt. Eine von einem Laser emittierte Laserstrahlung wird mittels einer Optik fokussiert. Eine Werkstückoberfläche an einer Stoßkante, also ein Fügestoß der zu verschweißenden Komponenten, befindet sich in unmittelbarer Nähe eines Fokus der Optik, d.h. in einem Brennfleck. Die Lage des Fokus relativ zur Komponentenoberfläche, d.h. oberhalb oder unterhalb, ist in den meisten Fällen ein wichtiger Schweißparameter und legt auch eine Einschweißtiefe fest. Der Brennfleck besitzt typische Durchmesser von einigen Zehntel Millimetern, wodurch sehr hohe Energiekonzentrationen entstehen, wenn der eingesetzte Laser typische Leistungen von einigen Kilowatt Laserleistung besitzt. Durch Absorption der Laserleistung erfolgt auf der Komponentenoberfläche ein extrem schneller Anstieg der Temperatur über eine Schmelztemperatur beispielsweise eines für die Komponenten eingesetzten Metalls hinaus, so dass sich eine Schmelze bildet. Durch eine hohe Abkühlgeschwindigkeit wird eine dabei erzeugte Schweißnaht je nach Werkstoff sehr hart und verliert in der Regel an Zähigkeit.

Es sind verschiedene Kombinationen der bekannten Schweißverfahren für unterschiedliche Einsatzzwecke entwickelt worden.

Beispielsweise wurde vorgeschlagen, Verschweißungen, die mit einem ersten Schweißverfahren wie beispielsweise dem Ultraschallschweißen erzeugt wurden, nachträglich oder vorangehend lokal durch Verschweißungen, die mit einem anderen Schweißverfahren wie beispielsweise dem Laserschweißen zu erzeugen sind, zu ergänzen. Auf diese Weise lassen sich Vorteile, die mit jedem einzelnen dieser Schweißverfahren erzielt werden können, zumindest teilweise kombinieren.

Außerdem sind verschiedene Modifikationen bekannter Schweißverfahren für unterschiedliche Einsatzzwecke entwickelt worden.

Beispielsweise wird in der CN 107570872 A ein durch Ultraschallvibrationen unterstütztes Laserschweißverfahren beschrieben. Ähnliche Verfahren sind in der CN 108381039 A und der CN 108326429 A beschrieben.

CN 105 414 763 A beschreibt ein koaxiales Ultraschall-unterstütztes Laserschweißverfahren für Plattenwärmetauscher.

EP 0 423 433 A1 beschreibt ein Verfahren und eine Vorrichtung zum Bonden von Komponentendrähten an Anschlussflächen, welche sich an einen nicht-starren Substrat befinden.

### ZUSAMMENFASSUNG DER ERFINDUNG UND VORTEILHAFTER AUSFÜHRUNGSFORMEN

Es kann ein Bedarf an einer Schweißeinrichtung und einem Schweißverfahren zum Verschweißen zweier Komponenten bestehen, bei denen sich Eigenschaften herkömmlicher Schweißtechnologien in vorteilhafter Weise kombinieren lassen. Insbesondere kann ein Bedarf an einer Schweißeinrichtung und einem Schweißverfahren bestehen, welche mit verhältnismäßig geringem geräteseitigem Aufwand und/oder Kostenaufwand eine Erzielung von Verschweißungen ermöglicht, die einerseits eine Verbindung zweier Komponenten mit vorteilhaften elektrischen Eigenschaften, insbesondere geringen elektrischen Widerständen, ermöglichen und die andererseits eine zuverlässige mechanische Kopplung beider Komponenten ermöglichen. Insbesondere kann ein Bedarf an einer Schweißeinrichtung und einem Schweißverfahren bestehen, welche sich vorteilhaft zum Verschweißen dünner Metallfolien miteinander und/oder mit einem Metallblech eignen und daher vorteilhaft z.B. im Rahmen einer Fertigung von Batteriezellen eingesetzt werden können.

Solchen Bedürfnissen kann mit dem Gegenstand eines der unabhängigen Ansprüche entsprochen werden. Vorteilhafte Ausführungsformen sind in den abhängigen Ansprüchen sowie der nachfolgenden Beschreibung definiert.

Gemäß einem ersten Aspekt der vorliegenden Erfindung wird eine Schweißeinrichtung gemäß Anspruch 1 beschrieben

Gemäß einer Ausführungsform wird eine Schweißeinrichtung vorgeschlagen, welche eine Ultraschallschweißeinrichtung und eine Laserschweißeinrichtung aufweist. Die Ultraschallschweißeinrichtung weist eine Ultraschallsonotrode und einen Amboss auf. Die Ultraschallsonotrode und der Amboss sind voneinander beabstandet gegenüberliegend angeordnet und schließen zwischen sich ein Arbeitsvolumen ein, in dem während eines Ultraschallschweißens wenigstens zwei zu verschweißende Komponenten anzuordnen sind. Die Laserschweißeinrichtung weist einen Laser zum Emittieren eines Laserstrahls auf. Die Ultraschallsonotrode und/oder der Amboss weisen angrenzend an bzw. innerhalb eines ersten Areals eine Durchgangsöffnung auf. Dabei sind die Ultraschallsonotrode und der Amboss dazu konfiguriert, die zwei Komponenten während des Ultraschallschweißens in dem ersten Areal von gegenüberliegenden Seiten an Kontaktflächen zu kontaktieren und miteinander durch Ultraschallschweißen zu verschweißen. Die Laserschweißeinrichtung ist dazu konfiguriert, den Laserstrahl durch die Durchgangsöffnung hindurch auf ein zweites Areal an den zwei Komponenten zu richten, um die zwei Komponenten ergänzend miteinander durch Laserschweißen zu verschweißen.

Gemäß einem zweiten Aspekt der vorliegenden Erfindung wird ein Verfahren gemäß Anspruch 10 zum Verschweißen wenigstens zweier Komponenten beschrieben, wobei die zwei Komponenten in einem ersten Areal miteinander durch Ultraschallschweißen verschweißt werden und die zwei Komponenten während des Ultraschallschweißens in einem zweiten Areal, welches kleiner ist als das erste Areal und welches innerhalb einer Außenumrandung des ersten Areals angeordnet ist, miteinander durch Laserschweißen verschweißt werden.

Ohne den Umfang der Erfindung in irgendeiner Weise zu beschränken, können Ideen und mögliche Merkmale zu Ausführungsformen der Erfindung unter anderem als auf den nachfolgend beschriebenen Gedanken und Erkenntnissen beruhend angesehen werden. Dabei werden mögliche Merkmale und Vorteile von Ausführungsformen der Erfindung hauptsächlich mit Bezug auf eine Anwendung bei einer Fertigung von Batteriezellen beschrieben. Hierdurch soll jedoch nicht ausgeschlossen sein, dass Ausführungsformen der Erfindung auch für andere Anwendungen eingesetzt werden können.

Bei der Fertigung von Batteriezellen muss regelmäßig eine Vielzahl dünner Metallfolien miteinander und/oder mit einem als Substrat dienenden Metallblech verbunden werden. Die Metallfolien führen hierbei zu Elektroden innerhalb der Batteriezelle und weisen typischerweise eine sehr geringe Dicke zwischen 5 µm und 30 µm auf. Meist bestehen die Metallfolien aus Aluminium und weisen an ihrer Oberfläche eine dünne Aluminiumoxidschicht auf. Das Metallblech kann Teil eines von außen kontaktierbaren elektrischen Kontakts der Batteriezelle sein bzw. mit einem solchen verbunden sein. Typischerweise ist das Metallblech wesentlich dicker als die Metallfolien und weist eine Dicke von mehreren 100 µm, beispielsweise zwischen 300 µm und 2 mm, auf. Dabei besteht das Metallblech zur Erreichung geringer Serienwiderstände oft aus Kupfer oder einer kupferhaltigen Legierung.

Bisher werden die Metallfolien untereinander und/oder mit dem Metallblech oft durch Laserschweißen verbunden. Dabei wird ein Laserstrahl hoher Leistung auf die Metallfolien und/oder das Metallblech gerichtet, sodass dortiges Metall kurzzeitig aufschmelzen kann und sich beim anschließenden Erstarren eine feste, formschlüssige Verbindung zwischen den Komponenten ergibt. Durch das kurzzeitige Aufschmelzen des Metalls können hohe Verbindungsfestigkeiten erreicht werden. Außerdem wird eine Durchkontaktierung im Bereich der Laserschweißstelle möglich. Allerdings muss während des Laserschweißens dafür gesorgt werden, dass die Metallfolien allenfalls über einen sehr geringen Spalt voneinander beabstandet sind, da ansonsten ein Risiko besteht, dass der Laserstrahl die Metallfolien nicht wie gewünscht miteinander verschweißt, sondern durch einzelne Metallfolien "hindurch schießt". Außerdem wurde beobachtet, dass das während des Laserschweißens aufgeschmolzener Metall nach dem anschließenden Erstarren härter als umgebendes Metall ist. Hierdurch bzw. durch eine damit einhergehende Versprödung kann es in Bereichen angrenzend an die Laserschweißstelle zu Brüchen, Rissen oder ähnlichem und somit zu einem Versagen der elektrischen und/oder mechanischen Anbindung zwischen den beiden Komponenten kommen.

Alternativ zu dem Einsatz von Laserschweißtechnologien können die Metallfolien und/oder das Metallblech durch Ultraschallschweißen miteinander verbunden werden. Durch Ultraschallschweißen lassen sich großflächige sowie bezogen auf elektrische Eigenschaften qualitativ sehr hochwertige Verbindungszonen erreichen, sodass eine hohe Stromübertragung durch die Schweißstelle hindurch möglich wird. Allerdings sind die durch Ultraschallschweißen zu erreichenden mechanischen Verbindungsfestigkeiten im Vergleich zum Laserschweißen meist geringer.

Es wurde bereits erkannt, dass die einerseits mittels Laserschweißen und andererseits mittels Ultraschallschweißen erreichbaren Vorteile kombiniert werden können bzw. mit der jeweiligen Schweißtechnologie einhergehende Nachteile reduziert werden können, indem eine zunächst mittels Ultraschallschweißen erzeugte großflächige Schweißstelle nachträglich noch an einem oder mehreren kleinflächigeren Punkten durch Laserschweißen verstärkt wird.

Es wurde nun für die vorliegende Erfindung herausgefunden, dass die beiden Schweißtechnologien des Laserschweißens und des Ultraschallschweißens noch vorteilhafter miteinander kombiniert werden können, wenn sie nicht sequenziell nacheinander, sondern im Wesentlichen zeitgleich bzw. zeitlich überlappend durchgeführt werden.

Um ein solches zeitgleiches Ultraschallschweißen und Laserschweißen zu ermöglichen, kann die in der erfindungsgemäßen Schweißeinrichtung eingesetzte Ultraschallschweißeinrichtung dazu ausgelegt sein, die beiden zu verschweißenden Komponenten innerhalb eines ersten Areals, das heißt innerhalb eines ersten Flächenbereichs an einer Grenzfläche zwischen den beiden aneinandergrenzenden Komponenten, durch Ultraschallschweißen zu verbinden. Eine Ultraschallsonotrode und ein Amboss der Ultraschallschweißeinrichtung können hierzu derart ausgestaltet sein, dass sie die im Arbeitsvolumen zwischen der Ultraschallsonotrode und dem Amboss aufgenommenen beiden Komponenten im Bereich des ersten Areals während des Ultraschallschweißvorgangs zumindest leicht aneinander pressen und in Schwingungen relativ zueinander versetzen. Die Schwingungen können dabei vorzugsweise in einer Ebene parallel zu der Grenzfläche zwischen den aneinandergrenzenden Komponenten bzw. parallel zu einer Oberfläche der Komponente, an der die Sonotrode anliegt, induziert werden.

Die Ultraschallsonotrode kann hierbei hinsichtlich ihrer Außenabmessungen, ihrer schwingungserzeugenden Bauteile und sonstiger funktioneller und/oder funktionaler Eigenschaften in gleicher oder ähnlicher Weise ausgestaltet sein wie herkömmliche Ultraschallsonotroden. Auch der Amboss kann hinsichtlich seiner Außenabmessungen und anderer struktureller und/oder funktionaler Eigenschaften in gleicher oder ähnlicher Weise ausgestaltet sein, die herkömmliche Ambosse.

Die bei der hier beschriebenen Schweißeinrichtung eingesetzte Ultraschallschweißeinrichtung soll sich vorzugsweise jedoch von herkömmlichen Ultraschallschweißeinrichtungen zumindest dadurch unterscheiden, dass in der Ultraschallsonotrode und/oder in dem Amboss eine Durchgangsöffnung vorgesehen ist. Anders ausgedrückt kann die Ultraschallsonotrode und/oder der Amboss kein vollflächig massives Bauteil sein, sondern beispielsweise in der Mitte ein durchgängiges Loch aufweisen.

Die Durchgangsöffnung kann dabei eine Querschnittsfläche aufweisen, die erheblich kleiner ist als eine Fläche, mit der die Sonotrode an den zu verschweißenden Komponenten anliegt. Beispielsweise kann die Durchgangsöffnung eine Querschnittsfläche von weniger als 10 mm², vorzugweise weniger als 2 mm², aber mehr als 0,1 mm², aufweisen. Ein Querschnitt der Durchgangsöffnung kann dabei rund oder eckig sein oder eine beliebige andere Geometrie aufweisen. Insbesondere kann die Durchgangsöffnung zylindrisch sein.

Die Durchgangsöffnung erstreckt sich hierbei durch die Ultraschallsonotrode bzw. den Amboss hindurch. Die Durchgangsöffnung bildet einen linearen Durchgang zwischen einer ersten Oberfläche der Ultraschallsonotrode bzw. des Amboss und einer entgegengesetzten zweiten Oberfläche der Ultraschallsonotrode bzw. des Amboss.

Die Durchgangsöffnung verläuft in einer Richtung quer zu einer Oberfläche, mit der die Ultraschallsonotrode bzw. der Amboss an in dem Arbeitsvolumen aufgenommene, zu verschweißende Komponenten angrenzt. Die Durchgangsöffnung mündet hierbei innerhalb einer Außenumrandung des durch die Ultraschallschweißeinrichtung zu verschweißenden ersten Areals. Die von der Ultraschallsonotrode bzw. dem Amboss kontaktierte Kontaktfläche einer der zu verschweißenden Komponenten ist somit keine durchgehende Fläche, sondern weist angrenzend an die Durchgangsöffnung einen Teilbereich auf, an dem die Sonotrode bzw. der Amboss die Oberfläche der jeweiligen Komponente nicht kontaktiert. Anders ausgedrückt kann die Kontaktfläche ringförmig sein, d.h. eine umlaufend geschlossene Fläche abdecken, und dabei den von der Sonotrode nicht kontaktierten Teilbereich umgeben. Eine Außenkontur der Kontaktfläche und/oder ein Querschnitt der Durchgangsöffnung können hierbei beliebige Geometrien aufweisen, d.h. beispielsweise rund, eckig, insbesondere viereckig bzw. rechteckig, sein.

Die Laserschweißeinrichtung der hier vorgestellten Schweißeinrichtung kann somit dazu konfiguriert sein, den von ihrem Laser emittierten Laserstrahl durch die beschriebene Durchgangsöffnung hindurch auf ein zweites Areal an den beiden zu verschweißenden Komponenten zu richten. Insbesondere kann das Laserschweißen mithilfe des sogenannten punktuellen Laserschweißens (englisch: laser spot welding) durchgeführt werden. Das zweite Areal liegt dabei innerhalb der von der Sonotrode bzw. dem Amboss nicht direkt kontaktierten Teilfläche, d.h. innerhalb der oben beschriebenen Ausnehmung in der von der Sonotrode kontaktierten Kontaktfläche. Mithilfe des hochenergetischen Laserstrahls können die beiden Komponenten somit in dem zweiten Areal lokal laserverschweißt werden. Insbesondere kann diese Laserschweißung in dem zweiten Areal erfolgen, während zeitgleich die Ultraschallschweißeinrichtung die Ultraschallschweißung in dem das zweite Areal umgebenden größeren ersten Areal durchführt.

Abhängig von den für eine bestimmte Anwendungskonfigurationen herrschenden Randbedingungen und/oder Anforderungen an eine zu erzeugende Verschweißung zweier oder mehrerer Komponenten kann es vorteilhaft sein, die Durchgangsöffnung in der Ultraschallsonotrode vorzusehen und den Laserstrahl der Laserschweißeinrichtung durch diese Durchgangsöffnung hindurch auf die zu der Ultraschallsonotrode gerichtete Oberfläche der Komponenten zu richten. In anderen Anwendungskonfigurationen kann es hingegen vorteilhaft sein, die Durchgangsöffnung in dem Amboss vorzusehen und den Laserstrahl der Laserschweißeinrichtung somit durch den Amboss hindurch auf die von der Ultraschallsonotrode weg gerichtete Oberfläche der Komponenten zu richten. In wiederum anderen Konfigurationen kann es vorteilhaft sein, sowohl in der Ultraschallsonotrode als auch in dem Amboss Durchgangsöffnungen vorzusehen und mithilfe von Laserstrahlen an beiden entgegengesetzten Oberflächen der Komponenten Laserschweißstellen zu erzeugen.

Es ist prinzipiell auch eine Ausgestaltung vorstellbar, bei der die Laserschweißeinrichtung den Laserstrahl nicht durch eine Durchgangsöffnung durch die Ultraschallsonotrode oder den Amboss hindurch richtet, sondern der Laserstrahl von der Seite her auf die zu verschweißenden Komponenten gerichtet wird. Der Laserstrahl kann dabei in der Ebene der zu verschweißenden Komponenten bzw. in einer Richtung parallel oder lediglich geringfügig geneigt zu dieser Ebene gerichtet sein.

Während in der erstgenannten Konstellation, bei der der Laserstrahl durch die Durchgangsöffnung in der Ultraschallsonotrode bzw. dem Amboss gerichtet wird, das zweite Areal vorzugsweise vollständig innerhalb der Außenumrandung des ersten Areals angeordnet ist, kann bei der zweitgenannten Konstellation, bei der der Laserstrahl von der Seite her auf die zu verschweißenden Komponenten gerichtet wird, das zweite Areal zumindest teilweise auch außerhalb des ersten Areals, aber angrenzend an dieses, angeordnet sein. Anders ausgedrückt können auch bei dieser zweitgenannten Konstellation das zweite Areal und das erste Areal sich zumindest bereichsweise überlappen und beide Areale grenzen zumindest nahe aneinander an, wobei ein seitlicher Abstand zwischen beiden Arealen kleiner als 2 mm ist.

Gemäß einer Ausführungsform der Erfindung kann die Schweißeinrichtung ferner eine Steuereinrichtung zum Steuern eines synchronisierten Betriebs der Ultraschallschweißeinrichtung und der Laserschweißeinrichtung aufweisen.

Anders ausgedrückt kann die Schweißeinrichtung über eine Steuereinrichtung verfügen, mithilfe derer der Betrieb ihrer Ultraschallschweißeinrichtung und der Betrieb ihrer Laserschweißeinrichtung geeignet zeitlich aufeinander abgestimmt werden können. Hierzu muss die Steuereinrichtung typischerweise sowohl mit der Ultraschallschweißeinrichtung als auch mit der Laserschweißeinrichtung kommunizieren können. Beispielsweise kann die Steuereinrichtung sowohl eine Leistungsversorgung zu der Ultraschallschweißeinrichtung als auch eine Leistungsversorgung zu der Laserschweißeinrichtung steuern.

Gemäß einer weiter konkretisierten Ausführungsform der Erfindung kann die Steuereinrichtung dazu konfiguriert sein, das Laserschweißen durch Ansteuern der Laserschweißeinrichtung durchzuführen, während das Ultraschallschweißen durch Ansteuern der Ultraschallschweißeinrichtung durchgeführt wird.

Mit anderen Worten kann die Steuereinrichtung die Ultraschallschweißeinrichtung dazu ansteuern, innerhalb eines ersten Zeitraums die Ultraschallsonotrode in Schwingungen zu versetzen und dadurch die beiden Komponenten in dem ersten Areal mittels Ultraschall zu verschweißen. Ferner kann die Steuereinrichtung die Laserschweißeinrichtung dazu ansteuern, innerhalb eines zweiten Zeitraums durch Emittieren des Laserstrahls die beiden Komponenten lokal in dem zweiten Areal miteinander zu verschweißen. Der erste Zeitraum und der zweite Zeitraum sollen dabei zeitgleich sein oder zumindest zeitlich überlappen, sodass das Laserschweißen erfolgt, während auch das Ultraschallschweißen durchgeführt wird. Typischerweise ist dabei der zweite Zeitraum, während dessen das Laserschweißen erfolgt, kürzer oder allenfalls gleich lang wie der erste Zeitraum, während dessen das Ultraschallschweißen erfolgt. Somit kann das Ultraschallschweißen beispielsweise bereits gestartet werden, bevor das Laserschweißen bewirkt wird, und/oder das Ultraschallschweißen kann noch nach dem Beenden des Laserschweißens kurzzeitig fortgeführt werden. Prinzipiell kann dabei der erste Zeitraum vor dem zweiten Zeitraum beginnen und der erste Zeitraum kann vor, zeitgleich mit oder nach dem zweiten Zeitraum enden. Alternativ können beide Zeiträume gleichzeitig beginnen und der erste Zeitraum kann vor, zeitgleich mit oder nach dem zweiten Zeitraum enden. Als weitere Alternative kann der zweite Zeitraum vor dem ersten Zeitraum beginnen und der erste Zeitraum kann vor, zeitgleich mit oder nach dem zweiten Zeitraum enden. Typische Dauern für den ersten und/oder den zweiten Zeitraum liegen dabei im Bereich von einigen 10 ms bis hin zu einigen Sekunden, beispielsweise zwischen 0,05 s und 1 s, vorzugsweise zwischen 0,1 s und 0,5 s.

Dadurch, dass mithilfe der hier vorgestellten Schweißeinrichtung eine Verschweißung zweier Komponenten zeitgleich sowohl mittels Ultraschallschweißen als auch mittels Laserschweißen in eng benachbarten ersten und zweiten Arealen durchgeführt werden kann, können ein oder mehrere der nachfolgend beschriebenen Vorteile erreicht werden.

Unter anderem kann in dem ersten Areal eine großflächige Verbindungszone generiert werden, wie sie beim Ultraschallschweißen typisch ist. Innerhalb dieser Verbindungszone können geringe elektrische Innenwiderstände erreicht werden, die auf dem hohen qualitativen Niveau von durch Ultraschallschweißen erzeugten Schweißverbindungen liegen können und somit geringere elektrische Widerstände besitzen können, als diese bei ausschließlich durch Laserschweißen erzeugten Schweißverbindungen auftreten.

Ferner können zumindest in dem zweiten Areal Verbindungfestigkeiten erzielt werden, wie sie beim Laserschweißen typischerweise erreicht werden können und die typischerweise größer sind als die durch Ultraschallschweißen generierbaren Verbindungsfestigkeiten.

Ein gesamter Schweißvorgang kann dabei in einem einzigen Arbeitsgang realisiert werden. Außerdem kann der gesamte Schweißvorgang mithilfe einer einzigen Schweißeinrichtung durchgeführt werden.

Es wird außerdem davon ausgegangen, dass dadurch, dass gleichzeitig mit dem Laserschweißen auch das Ultraschallschweißen durchgeführt wird, vorteilhafte Randbedingungen für das Laserschweißen geschaffen werden können. Insbesondere wird davon ausgegangen, dass eine Schmelze, die beim Laserschweißen durch einen Energieeintrag des Lasers in den zu verschweißenden Komponenten kurzzeitig erzeugt wird, aufgrund der gleichzeitig beim Ultraschallschweißen generierten Schwingungen homogenisiert werden kann. Durch die Homogenisierung können beispielsweise lokale Temperaturgradienten innerhalb der Schmelze reduziert werden und/oder andere Differenzen zwischen lokal vorherrschenden physikalischen Eigenschaften innerhalb der Schmelze vermindert werden. Diese Homogenisierung kann sich nach dem anschließenden Erstarren vorteilhaft auf die durch das Laserschweißen erzeugte Schweißstelle auswirken.

Ferner wurde beobachtet, dass dadurch, dass das Laserschweißen zeitgleich mit dem Ultraschallschweißen durchgeführt wird, eine für das Laserschweißen einzusetzende Laserleistung in vielen Anwendungsfällen drastisch geringer sein kann als bei Anwendungsfällen, in denen Komponenten ausschließlich durch Laserschweißen miteinander verbunden werden. Das zeitgleiche Ultraschallschweißen scheint für einen gewissen Energieeintrag in das Material an der Laserschweißstelle bzw. angrenzend zu dieser zu sorgen, der das Laserschweißen unterstützt.

Dementsprechend kann gemäß einer Ausführungsform die Laserschweißeinrichtung dazu konfiguriert sein, zum Laserschweißen Laserlicht mit einer Leistung von weniger als 3 kW, vorzugsweise weniger als 1,5 kW, zu emittieren.

Solche verhältnismäßig geringen Laserleistungen können insbesondere im Zusammenspiel mit dem zeitgleichen Ultraschallschweißen auch genügen, um Komponenten mit substantieller Masse, d.h. beispielsweise Komponenten in Form von Blechen und nicht nur dünnen Folien, miteinander verschweißen zu können. Herkömmlich mussten hierzu meist Laser eingesetzt werden, die über eine Laserleistung von beispielsweise 4 kW oder mehr verfügten. Durch den Einsatz von Lasern geringerer Leistung können sowohl Kosten für den Laser als auch Kosten für dessen Energieverbrauch reduziert werden.

Das zeitgleich bzw. zeitlich überlappend durchzuführende Ultraschallschweißen kann vorzugsweise ebenfalls mit verhältnismäßig geringen Leistungen durchgeführt werden, beispielsweise mit einer Leistung von weniger als 12 kW oder weniger als 8 kW, vorzugsweise weniger als 6 kW oder sogar weniger als 4 kW. Somit können die beiden Schweißtechnologien, d.h. das Ultraschallschweißen und das Laserschweißen, wenn sie zeitlich überlappend durchgeführt werden, mit deutlich geringeren Leistungen betrieben werden, als dies bei einer zeitlich separierten Durchführung der Fall wäre.

Gemäß einer Ausführungsform der Erfindung kann die Laserschweißeinrichtung dazu konfiguriert sein, den Laserstrahl schräg zu der Kontaktfläche auf das zweite Areal zu richten.

Anders ausgedrückt kann der Laser der Laserschweißeinrichtung derart angeordnet und orientiert sein, dass der von ihm emittierte Laserstrahl auf das zweite Areal nicht senkrecht, sondern unter einem schrägen Winkel von beispielsweise zwischen 1° und 89°, vorzugsweise zwischen 30° und 85° und stärker bevorzugt zwischen 50° und 80° relativ zu dem zweiten Areal bzw. der das zweite Areal einschließenden Kontaktfläche auftrifft.

Ein solches schräges Auftreffen des Laserstrahls kann dahingehend vorteilhaft sein, dass eine beim Laserschweißen erzeugte Schweißstelle sich nicht notwendigerweise senkrecht zu einer Außenoberfläche der zu verschweißenden Komponenten, sondern schräg zu dieser, in die Komponenten hinein bzw., z.B. im Falle von mehreren zu verschweißenden dünnen Folien, durch die Komponenten hindurch erstreckt. Eine derart schräg orientierte Schweißstelle kann bei mechanischen Belastungen, die in bestimmte Richtungen wirken, eine höhere Festigkeit bzw. einen höheren Zusammenhalt der verschweißten Komponenten aufweisen, als dies bei einer senkrecht orientierten Schweißstelle der Fall sein kann. Insbesondere kann eine Anbindungsfläche zwischen den zu verschweißenden Komponenten bei schrägem Laserstrahl einfall größer sein als bei senkrechtem Laserstrahl einfallen.

Gemäß einer Ausführungsform der Erfindung kann dabei die Durchgangsöffnung, welche sich durch die Ultraschallsonotrode und/oder den Amboss erstreckt, schräg zu den Kontaktflächen ausgerichtet sein.

Prinzipiell kann es zwar auch möglich sein, durch eine sich senkrecht zu der Kontaktfläche erstreckende Durchgangsöffnung den Laserstrahl schräg zu der Kontaktfläche durchlaufen zu lassen, sofern die Durchgangsöffnung ausreichend große laterale Abmessungen, d.h. beispielsweise einen ausreichend großen Durchmesser, aufweist. Allerdings kann es vorteilhaft sein, die Durchgangsöffnung mit möglichst kleinen lateralen Abmessungen auszugestalten, um beispielsweise die Ultraschallsonotrode nicht übermäßig mechanisch zu schwächen. Insbesondere kann es vorteilhaft sein, die Durchgangsöffnung mit lateralen Abmessungen auszugestalten, die in etwa dem Durchmesser des durchzuleitenden Laserstrahls entsprechen bzw. lediglich geringfügig größer als diese sind. Um den Laserstrahl schräg relativ zu der Kontaktfläche auf die zu verschweißenden Komponenten auftreffen lassen zu können, kann es daher vorteilhaft sein, auch die Durchgangsöffnung durch die Sonotrode bzw. den Amboss schräg verlaufen zu lassen. Ein Winkel, unter dem die Durchgangsöffnung relativ zu der Kontaktfläche mit den zu verschweißenden Komponenten orientiert ist, kann dabei in etwa dem oben beschriebenen Winkel entsprechen, unter dem der Laserstrahl auf das zweite Areal gerichtet werden soll.

Alternativ könnte die Durchgangsöffnung konisch oder doppelkonisch ausgestaltet sein, sodass der Laserstrahl schräg zu der Kontaktfläche verlaufend durch die Durchgangsöffnung hindurch reichen kann und trotzdem eine mechanische Stabilität der die Durchgangsöffnung aufweisenden Ultraschallsonotrode bzw. des Amboss nicht übermäßig reduziert wird.

Gemäß einer Ausführungsform der Erfindung kann die Ultraschallsonotrode und/oder der Amboss innerhalb des ersten Areals mehrere Durchgangsöffnungen aufweisen. Die Laserschweißeinrichtung kann in diesem Fall dazu konfiguriert sein, Laserstrahle durch jede der Durchgangsöffnungen hindurch auf mehrere zweite Areale an den zwei Komponenten zu richten, um die zwei Komponenten ergänzend miteinander durch Laserschweißen zu verschweißen.

Mit anderen Worten kann die Schweißeinrichtung dazu eingerichtet sein, ergänzend zu dem Verschweißen der Komponenten durch Ultraschallschweißen die Komponenten nicht lediglich an einer einzigen Stelle zusätzlich durch Laserschweißen zu verbinden, sondern mehrere Laserschweißstellen zu generieren, indem Laserstrahle auf mehrere zweite Areale an den Komponenten gerichtet werden.

Durch das Generieren mehrerer Laserschweißstellen kann eine mechanische Festigkeit der erzeugten Schweißverbindung erhöht werden. Insbesondere können zwei, drei, vier oder mehr Laserschweißstellen an mehreren zueinander benachbarten und/oder voneinander beabstandeten zweiten Arealen erzeugt werden.

Hierzu kann ein einzelner von einem Laser emittierter Laserstrahl nacheinander auf jedes der zweiten Areale gerichtet werden, um dort eine Laserschweißstelle zu erzeugen. Beispielsweise kann der Laserstrahl sukzessive mithilfe einer geeigneten Optik umgelenkt werden. Alternativ kann ein einzelner Laserstrahl mithilfe einer geeigneten Optik in mehrere Teil-Laserstrahle unterteilt werden und dann jeder dieser Teil-Laserstrahle auf eines der zweiten Areale gerichtet werden, um dort eine Laserschweißstelle zu erzeugen. Als weitere Alternative könnten mehrere Laser eingesetzt werden, die mehrere Laserstrahle generieren und jeder dieser Laserstrahle könnte auf eines der zweiten Areale gerichtet werden.

Gemäß einer Ausführungsform kann die Laserschweißeinrichtung dazu konfiguriert sein, den Laserstrahl zum Laserschweißen mit Laserlicht mit einer Wellenlänge von weniger als 600 nm, vorzugsweise weniger als 500 nm, zu emittieren. D.h. bei dem vorgestellten Schweißverfahren kann zum Laserschweißen Laserlicht mit Wellenlängen im genannten Bereich eingesetzt werden.

Dieser Ausführungsform liegt eine Erkenntnis zugrunde, gemäß der bestimmte Komponenten bzw. Komponenten aus bestimmten Materialien besonders vorteilhaft mit kürzerwelligem Laserlicht lasergeschweißt werden können. Bisher wurden zum Laserschweißen insbesondere von metallischen Komponenten meist leistungsstarke Laser mit Laserlicht im roten bzw. infraroten Wellenlängenbereich, d.h. mit Laserlicht einer Wellenlänge von meist mehr als 700 nm, eingesetzt. Es wurde nun jedoch erkannt, dass beispielsweise Komponenten aus Buntmetallen wie zum Beispiel Kupfer oder einer Kupferlegierung mit kürzerwelligem Laserlicht vorteilhaft verschweißt werden können. Insbesondere grünes Laserlicht, d.h. Laserlicht mit Wellenlängen von ca. 500-600 nm, oder noch kürzerwelliges blaues Laserlicht, das heißt Laserlicht mit Wellenlängen von ca. 400-500 nm, kann positive Eigenschaften bei den damit erzeugten Laserschweißstellen bewirken. Insbesondere kann sich positiv auswirken, dass das kurzweilige Laserlicht sehr effizient in dem zu verschweißenden Material absorbiert werden kann und somit ein schnelles Aufschmelzen des Materials ermöglicht. Das schnelle Aufschmelzen kann dabei unter anderem bewirken, dass Buntmetall ohne Verdampfung aufgeschmolzen werden kann, was zu einer hohen Stabilität des dabei generierten Schmelzbades führen kann.

Generell können zum Laserschweißen Laser mit unterschiedlichen Eigenschaften hinsichtlich eines emittierten Laserlichts und/oder einer Strahlgeometrie eingesetzt werden. Beispielsweise können je nach herrschenden Randbedingungen und zu erzeugenden Laserschweißstellen Laser eingesetzt werden, die einen Laserstrahl kontinuierlich emittieren, d.h. sogenannte cw-Laser (continuous wave). Ein solcher cw-Laser kann Laserschweißstellen typischerweise innerhalb einiger zehn bis einiger hundert Millisekunden, beispielsweise innerhalb von zwischen 0,1 s und 0,5 s, erzeugen. Alternativ können Laser eingesetzt werden, die einen gepulsten Laserstrahl emittieren. Eine Pulsdauer kann dabei anwendungsspezifisch gewählt sein und in einem Mikrosekundenbereich, einem Nanosekundenbereich, einem Picosekundenbereich oder sogar einem Femtosekundenbereich liegen.

Das hierin ergänzend zu der Schweißeinrichtung beschriebene Schweißverfahren gemäß dem dritten Aspekt der Erfindung kann insbesondere mithilfe einer Schweißeinrichtung gemäß einer Ausführungsform des ersten oder zweiten Aspekts der Erfindung durchgeführt werden. Dementsprechend können die für die Schweißeinrichtung beschriebenen Merkmale in analoger Weise auch für das Schweißverfahren eingesetzt werden.

Beispielsweise können bei dem Schweißverfahren gemäß einer Ausführungsform die zu verschweißenden Komponenten mehrere Metallfolien sein.

Es wird davon ausgegangen, dass insbesondere beim Verschweißen von dünnen Metallfolien wie beispielsweise Aluminiumfolien, wie es bei der Fertigung von Batteriezellen benötigt wird, die beschriebene Kombination aus Ultraschallschweißen und gleichzeitigem Laserschweißen sehr positive Ergebnisse erlaubt.

Bei dem bisher zu diesem Anwendungszweck eingesetzten reinen Laserschweißen hat es sich als schwierig erwiesen, mehrere der dünnen Metallfolien gleichzeitig in geeigneter Weise lokal aufzuschmelzen. Es bestand insbesondere das Risiko, dass Metallfolien, anstatt lokal aufgeschmolzen und damit verschweißt zu werden, von dem Laserstrahl "durchschossen" wurden. Insbesondere war das reine Laserschweißen empfindlich gegenüber vorhandenen Luftspalten zwischen zu verschweißenden Metallfolien. Außerdem weisen durch Laserschweißen erzeugte Schweißstellen oft relativ schlechte elektrische Eigenschaften, insbesondere verhältnismäßig hohe elektrische Widerstände, auf.

Andererseits führte der alleinige Einsatz von Ultraschallschweißen zum Verbinden von Metallfolien zwar zu guten elektrischen Verbindungen, die dabei erzeugten mechanischen Verbindungen waren jedoch oft unzureichend.

Mit der hier vorgeschlagenen Kombination aus Ultraschallschweißen und zeitgleich durchgeführtem Laserschweißen können die Metallfolien von der Ultraschallschweißeinrichtung in Anlage miteinander gepresst und im ersten Areal miteinander verschweißt werden und gleichzeitig können im zweiten Areal die aneinander anliegenden Metallfolien risikoarm durch Laserschweißen miteinander verbunden werden. Hierdurch kann eine elektrisch sehr gut leitfähige und trotzdem mechanisch hoch belastbare stoffschlüssige Verbindung zwischen den Metallfolien erzeugt werden.

Gemäß einer alternativen Ausführungsform können bei dem Schweißverfahren die zu verschweißenden Komponenten wenigstens eine Metallfolie und wenigstens ein Metallblech sein.

Auch diese Aufgabenstellung, eine oder mehrere dünne Metallfolien mit wenigstens einem Metallblech zu verschweißen, kann insbesondere bei der Fertigung von Batteriezellen auftreten. Die dünnen Metallfolien können mit Elektroden beispielsweise eines Wickels im Innern der Batteriezelle verbunden sein und müssen dann mit einem Metallblech, welches als von außen kontaktierbarer Anschluss dienen kann, verschweißt werden. Das Metallblech hat dabei eine um ein Vielfaches größere Dicke als die Metallfolien. Dies kann beim herkömmlichen Laserschweißen zu Problemen dahingehend führen, das Material des Metallblechs schwieriger bzw. langsamer aufzuschmelzen ist als Material der Metallfolien. Je nach Eigenschaften des zum Laserschweißen eingesetzten Lasers kann es hierdurch zu Beschädigungen der Metallfolien und/oder zur Ausbildung unzureichender Schweißstellen kommen. Es wird davon ausgegangen, dass insbesondere in dem genannten Anwendungsfall durch eine Kombination aus Ultraschallschweißen und gleichzeitigem Laserschweißen in vorteilhafter und zuverlässiger Weise Schweißstellen mit sowohl guten elektrischen als auch guten mechanischen Eigenschaften erzeugt werden können.

Gemäß einer Ausführungsform können bei dem Schweißverfahren zumindest eine Metallfolie und/oder zumindest ein Metallblech überwiegend aus Kupfer bestehen.

Insbesondere kann die die Metallfolie und/oder das Metallblech vollständig aus Kupfer oder einer Kupferlegierung bestehen. Solche kupferhaltigen Komponenten können einen sehr niedrigen Serienwiderstand aufweisen, waren aber mit herkömmlichen Schweißverfahren oft allenfalls schwierig zu verarbeiten. Mit dem hier vorgestellten Schweißverfahren können beispielsweise durch einen Einsatz eines kurzweiligen Lasers zusammen mit dem gleichzeitigen Ultraschallschweißen auch kupferhaltige Komponenten untereinander und/oder mit anderen metallischen Komponenten vorteilhaft verschweißt werden.

Es wird darauf hingewiesen, dass mögliche Merkmale und Vorteile von Ausführungsformen der Erfindung hierin teilweise mit Bezug auf eine erfindungsgemäß ausgestaltete Schweißeinrichtung und teilweise mit Bezug auf ein erfindungsgemäß ausgestaltetes Schweißverfahren beschrieben sind. Ein Fachmann wird erkennen, dass die für einzelne Ausführungsformen beschriebenen Merkmale in analoger Weise geeignet auf andere Ausführungsformen übertragen werden können, angepasst werden können und/oder ausgetauscht werden können, um zu weiteren Ausführungsformen der Erfindung und möglicherweise Synergieeffekten zu gelangen.

### KURZE BESCHREIBUNG DER ZEICHNUNGEN

Nachfolgend werden vorteilhafte Ausführungsformen der Erfindung unter Bezugnahme auf die beigefügten Zeichnungen weiter erläutert, wobei weder die Zeichnungen noch die Erläuterungen als die Erfindung in irgendeiner Weise einschränkend auszulegen sind.
Fig. 1 zeigt eine stark schematisierte Ansicht einer Schweißeinrichtung gemäß einer Ausführungsform der vorliegenden Erfindung.
Fig. 2 zeigt eine perspektivische Ansicht auf eine Sonotrode und einen Amboss einer Ultraschallschweißeinrichtung einer Schweißeinrichtung gemäß einer Ausführungsform der vorliegenden Erfindung.
Fig. 3 zeigt eine Schnittansicht durch eine Sonotrode und einen Amboss einer Ultraschallschweißeinrichtung einer Schweißeinrichtung gemäß einer Ausführungsform der vorliegenden Erfindung.
Fig.4 zeigt eine Draufsicht auf folienartige Komponenten, welche mit einem Schweißverfahren gemäß einer Ausführungsform der vorliegenden Erfindung miteinander verschweißt wurden.
Fig. 5 zeigt eine Schnittansicht durch eine Sonotrode und einen Amboss einer Ultraschallschweißeinrichtung einer Schweißeinrichtung gemäß einer alternativen Ausführungsform der vorliegenden Erfindung.
Fig.6 zeigt eine Draufsicht auf folienartige Komponenten, welche mit einem Schweißverfahren gemäß einer alternativen Ausführungsform der vorliegenden Erfindung miteinander verschweißt wurden.

Die Figuren sind lediglich schematisch und nicht maßstabsgetreu. Gleiche Bezugszeichen bezeichnen in den verschiedenen Zeichnungen gleiche bzw. gleichwirkende Merkmale.

### BESCHREIBUNG VON VORTEILHAFTEN AUSFÜHRUNGSFORMEN

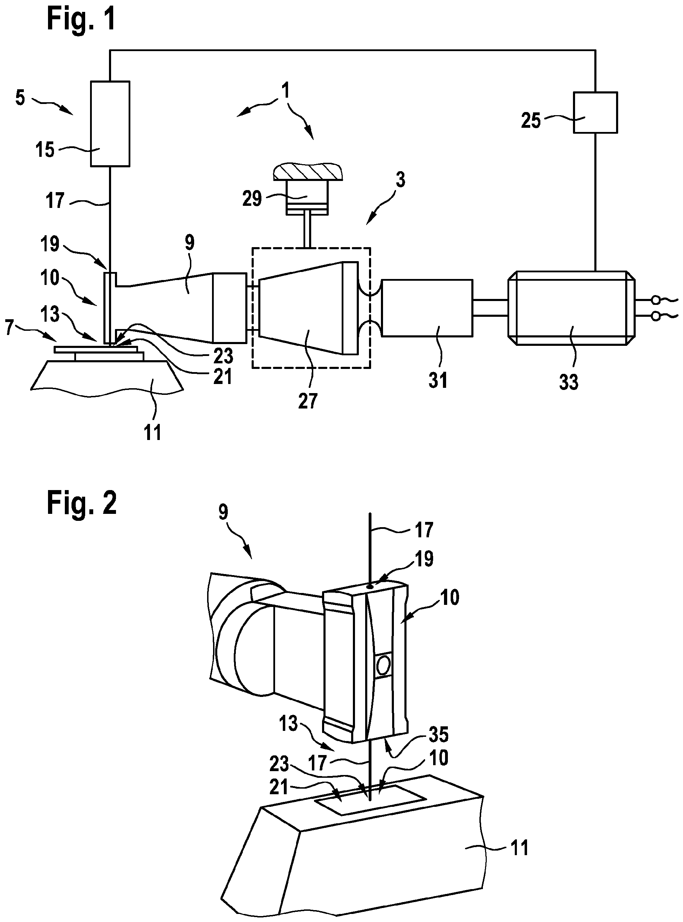

Fig. 1 zeigt eine Schweißeinrichtung 1 gemäß einer Ausführungsform der Erfindung. Die Schweißeinrichtung 1 umfasst eine Ultraschallschweißeinrichtung 3 sowie eine Laserschweißeinrichtung 5. Ein Betrieb der Ultraschallschweißeinrichtung 3 und ein Betrieb der Laserschweißeinrichtung 5 können dabei jeweils von einer Steuereinrichtung 25 gesteuert werden.

Dabei ist die Schweißeinrichtung 1 dazu ausgelegt, in einem Arbeitsvolumen 13 wenigstens zwei zu verschweißende Komponenten 7 aufzunehmen und diese zeitgleich sowohl in einem ersten Areal 21 durch Ultraschallschweißen miteinander zu verschweißen als auch in einem zweiten Areal 23 durch Laserschweißen miteinander zu verschweißen.

Wie in Fig. 2 ergänzend und detaillierter dargestellt, verfügt die Ultraschallschweißeinrichtung 3 über eine Ultraschallsonotrode 9 und einen Amboss 11, die an einander gegenüberliegenden Seiten des Arbeitsvolumens 13 angeordnet sind. Ferner verfügt die Ultraschallschweißeinrichtung 3 über einen Ultraschallgenerator 33, in dem Ultraschallschwingungen mit typischen Frequenzen von zwischen 20 kHz und 50 kHz erzeugt werden können. Die Ultraschallschwingungen können dann über einen Konverter 31 und einen Booster 27 als mechanische Schwingungen auf die Ultraschallsonotrode 9 übertragen werden. Mithilfe eines Aktuators 29 kann der Booster 27 und die mit diesem mechanisch gekoppelte Ultraschallsonotrode 9 hin zu dem Arbeitsvolumen 13 bewegt werden. Auf diese Weise kann eine texturierte Anpressfläche 35 an der Ultraschallsonotrode 9 gegen eine zu dieser gerichtete Oberfläche einer der zu verschweißenden Komponenten 7 (in Fig. 2 aus Übersichtlichkeitsgründen nicht dargestellt) gedrückt werden. Dadurch können die zu verschweißenden Komponenten 7 zwischen der Anpressfläche 35 der Ultraschallsonotrode 9 und dem Amboss 11 eingespannt werden.

Von herkömmlichen Ultraschallschweißeinrichtungen unterscheidet sich die hierin beschriebene Ultraschallschweißeinrichtung 3 insbesondere dadurch, dass in ihrer Ultraschallsonotrode 9 und/oder ihrem Amboss 11 eine Durchgangsöffnung 19 vorgesehen ist, durch die hindurch ein von einem Laser 15 emittierter Laserstrahl 17 der Laserschweißeinrichtung 5 in das Arbeitsvolumen 13 und somit auf die dort aufgenommenen Komponenten 7 gerichtet werden kann.

Im dargestellten Beispiel ist die Durchgangsöffnung 19 in der Ultraschallsonotrode 9 ausgebildet. Dabei erstreckt sich die Durchgangsöffnung 19 quer zu der Anpressfläche 35 durch einen gesamten Sonotrodenkopf 10 hindurch. Dementsprechend kann der im dargestellten Beispiel oberhalb der Ultraschallsonotrode 9 angeordnete Laser 15 seinen Laserstrahl 17 durch die Durchgangsöffnung 19 hindurch auf das zweite Areal 23 an der nach oben gerichteten Oberfläche der oberen zu verschweißenden Komponenten 7 richten.

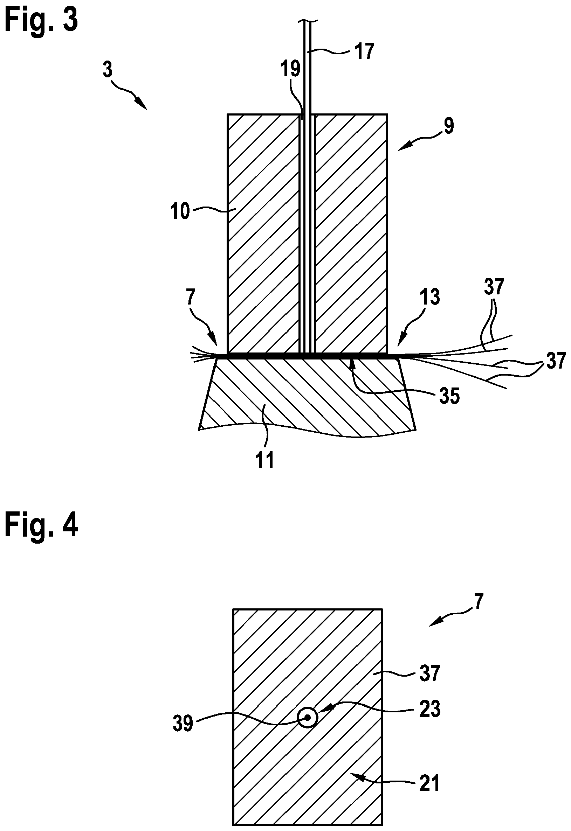

In Fig. 3 ist eine Schnittansicht durch die Ultraschallsonotrode 9 und den Amboss 11 einer Ultraschallschweißeinrichtung 3 dargestellt. In dem Arbeitsvolumen 13 sind dabei zu verschweißende Komponenten 7 in Form mehrerer dünner Metallfolien 37 aufgenommen. Aus Übersichtlichkeitsgründen sind lediglich vier Metallfolien 37 dargestellt, in der Praxis können jedoch deutlich mehr solche Metallfolien 37 miteinander zu verschweißen sein.

In Fig. 4 ist eine Draufsicht auf die zu verschweißenden Komponenten 7 dargestellt.

Die Metallfolien 37 werden während eines Schweißvorgangs von der texturierten Anpressfläche 35 der Ultraschallsonotrode 9 gegen eine gegenüberliegende Anpressfläche des Amboss 11 gedrückt und somit miteinander in Anlage gebracht. Dabei leitet die Ultraschallsonotrode 9 mechanische Ultraschallschwingungen über die texturierte Anpressfläche 35 in den Stapel aus Metallfolien 37 ein, sodass diese durch Ultraschallschweißen miteinander verbunden werden.

Während des Ultraschallschweißens wird ergänzend der Laserstrahl 17 durch die Durchgangsöffnung 19 in der Ultraschallsonotrode 9 gerichtet. Auf diese Weise wird simultan zu dem Ultraschallschweißen eine die Komponenten 7 verbindende Schweißstelle 39 durch Laserschweißen erzeugt.

Aufgrund der in der Ultraschallsonotrode 9 vorgesehenen Durchgangsöffnung 19 ist die Anpressfläche 35 der Ultraschallsonotrode 9 nicht vollflächig, sondern besitzt in ihrem Zentrum eine durch die Durchgangsöffnung 19 bedingte Ausnehmung. Während des Schweißvorgangs kann die Ultraschallsonotrode 9 somit mit ihrer ringförmig ausgebildeten Anpressfläche 35 ein großflächiges erstes Areal 21 an den Komponenten 7 kontaktieren und die Komponenten 7 dort mittels Ultraschallschweißens verbinden. Im Bereich der Ausnehmung erreicht der Laserstrahl 17 ein zweites Areal 23 und kann dort durch Laserschweißen die näherungsweise punktförmige Schweißstelle 39 erzeugen. Das zweite Areal 23 ist hierbei erheblich kleiner als das erste Areal 21 und befindet sich innerhalb des ersten Areals 21, das heißt wird von dem ersten Areal 21 ringförmig umgeben.

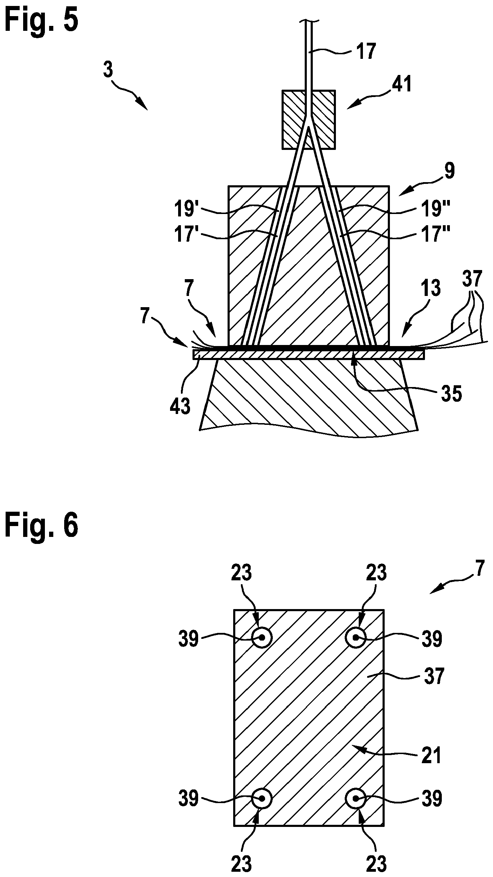

In den Fign. 5 und 6 ist eine Schnittansicht durch eine alternativ ausgestaltete Ultraschallsonotrode 9 einer Ultraschallschweißeinrichtung 3 sowie eine Draufsicht auf damit verschweißte Komponenten 7 dargestellt.

Als zu verschweißende Komponenten 7 wirken in diesem Fall mehrere Metallfolien 37 sowie ein im Vergleich zu den Metallfolien 37 erheblich dickeres Metallblech 43. Die Metallfolien 37 und das Metallblech 43 können dabei aus verschiedenen Materialien bestehen. Insbesondere können die Metallfolien 37 beispielsweise aus Aluminium bestehen, wohingegen das Metallblech 43 aus Kupfer oder einer Kupferlegierung bestehen kann.

Die Ultraschallsonotrode 9 verfügt in diesem Beispiel über mehrere Durchgangsöffnungen 19`, 19". Im dargestellten Beispiel wird der Laserstrahl 17 mithilfe eines Strahlteilers 41 in mehrere separate Laserstrahle 17', 17" unterteilt. Jeder der Laserstrahle 17', 17" wird durch eine der Durchgangsöffnungen 19', 19" auf eines von mehreren zweiten Arealen 23 gerichtet, um dort durch Laserschweißen mehrere Schweißstellen 39 zu erzeugen.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Schweißeinrichtung
- 3: Ultraschallschweißeinrichtung
- 5: Laserschweißeinrichtung
- 7: zu verschweißende Komponenten
- 9: Ultraschallsonotrode
- 10: Sonotrodenkopf
- 11: Amboss
- 13: Arbeitsvolumen
- 15: Laser
- 17: Laserstrahl
- 19: Durchgangsöffnung
- 21: erstes Areal
- 23: zweites Areal
- 25: Steuereinrichtung
- 27: Booster
- 29: Aktuator
- 31: Konverter
- 33: Ultraschallgenerator
- 35: texturiert Anpressfläche
- 37: Metallfolien
- 39: Schweißstelle
- 41: Strahlteiler
- 43: Metallblech

## Patentansprüche

1. Schweißeinrichtung (1), aufweisend:
eine Ultraschallschweißeinrichtung (3),
eine Laserschweißeinrichtung (5), und
eine Steuereinrichtung (25),
wobei die Schweißeinrichtung (1) dazu konfiguriert ist, wenigstens zwei Komponenten (7) in einem ersten Areal (21) mithilfe der Ultraschallschweißeinrichtung (3) miteinander durch Ultraschallschweißen zu verschweißen und die zwei Komponenten (7) während des Ultraschallschweißens in einem zweiten Areal (23), welches kleiner ist als das erste Areal (21), wobei das zweite Areal, welches zumindest teilweise innerhalb einer Außenumrandung des ersten Areals (21) und/oder angrenzend mit einem seitlichen Abstand kleiner als 2 mm an die Außenumrandung des ersten Areals (21) angeordnet ist, mithilfe der Laserschweißeinrichtung (5) miteinander durch Laserschweißen zu verschweißen,
wobei die Steuereinrichtung dazu konfiguriert ist, die Ultraschallschweißeinrichtung dazu anzusteuern, innerhalb eines ersten Zeitraums die Ultraschallsonotrode in Schwingungen zu versetzen und dadurch die beiden Komponenten in dem ersten Areal mittels Ultraschall zu verschweißen, und die Laserschweißeinrichtung dazu anzusteuern, innerhalb eines zweiten Zeitraums durch Emittieren des Laserstrahls die beiden Komponenten lokal in dem zweiten Areal miteinander zu verschweißen, wobei der erste Zeitraum und der zweite Zeitraum zeitgleich sind oder zumindest zeitlich überlappen.

2. Schweißeinrichtung (1) nach Anspruch 1,
wobei die Ultraschallschweißeinrichtung (3) eine Ultraschallsonotrode (9) und einen Amboss (11) aufweist, wobei die Ultraschallsonotrode (9) und der Amboss (11) voneinander beabstandet gegenüberliegend angeordnet sind und zwischen sich ein Arbeitsvolumen (13) einschließen, in dem während eines Ultraschallschweißens wenigstens zwei zu verschweißende Komponenten (7) anzuordnen sind,
wobei die Laserschweißeinrichtung (5) einen Laser (15) zum Emittieren eines Laserstrahls (17) aufweist,
wobei die Ultraschallsonotrode (9) und/oder der Amboss (11) innerhalb eines ersten Areals (21) eine Durchgangsöffnung (19) aufweisen,
wobei die Ultraschallsonotrode (9) und der Amboss (11) dazu konfiguriert sind, die zwei Komponenten (7) während des Ultraschallschweißens in dem ersten Areal (21) von gegenüberliegenden Seiten an Kontaktflächen zu kontaktieren und miteinander durch Ultraschallschweißen zu verschweißen, und
wobei die Laserschweißeinrichtung (5) dazu konfiguriert ist, den Laserstrahl (17) durch die Durchgangsöffnung (19) hindurch auf ein zweites Areal (23) an den zwei Komponenten (7) zu richten, um die zwei Komponenten (7) ergänzend miteinander durch Laserschweißen zu verschweißen.

3. Schweißeinrichtung nach Anspruch 2,
wobei die Schweißeinrichtung (1) ferner die Steuereinrichtung (25) zum Steuern eines synchronisierten Betriebs der Ultraschallschweißeinrichtung (3) und der Laserschweißeinrichtung (5) aufweist.

4. Schweißeinrichtung nach Anspruch 3,
wobei die Steuereinrichtung (25) dazu konfiguriert ist, das Laserschweißen durch Ansteuern der Laserschweißeinrichtung (5) durchzuführen, während das Ultraschallschweißen durch Ansteuern der Ultraschallschweißeinrichtung (3) durchgeführt wird.

5. Schweißeinrichtung nach einem der Ansprüche 2 bis 4, wobei die Laserschweißeinrichtung (5) dazu konfiguriert ist, den Laserstrahl (17) schräg zu der Kontaktfläche auf das zweite Areal (23) zu richten.

6. Schweißeinrichtung nach einem der Ansprüche 2 bis 5, wobei die Durchgangsöffnung (19) schräg zu der Kontaktfläche ausgerichtet ist.

7. Schweißeinrichtung nach einem der Ansprüche 2 bis 6,
wobei die Ultraschallsonotrode (9) und/oder der Amboss (11) innerhalb des ersten Areals (21) mehrere Durchgangsöffnungen (19', 19") aufweisen, und
wobei die Laserschweißeinrichtung (5) dazu konfiguriert ist, Laserstrahle (17', 17") durch jede der Durchgangsöffnungen (19', 19") hindurch auf mehrere zweite Areale (23) an den zwei Komponenten (7) zu richten, um die zwei Komponenten (7) ergänzend miteinander durch Laserschweißen zu verschweißen.

8. Schweißeinrichtung nach einem der vorangehenden Ansprüche,
wobei die Laserschweißeinrichtung (5) dazu konfiguriert ist, den Laserstrahl (17) zum Laserschweißen mit Laserlicht mit einer Wellenlänge von weniger als 600 nm, vorzugsweise weniger als 500 nm, zu emittieren.

9. Schweißeinrichtung nach einem der vorangehenden Ansprüche,
wobei die Laserschweißeinrichtung (5) dazu konfiguriert ist, zum Laserschweißen Laserlicht mit einer Leistung von weniger als 3 kW zu emittieren.

10. Verfahren zum Verschweißen wenigstens zweier Komponenten (7), wobei die zwei Komponenten (7) in einem ersten Areal (21) miteinander durch Ultraschallschweißen verschweißt werden und die zwei Komponenten (7) während des Ultraschallschweißens in einem zweiten Areal (23), welches kleiner ist als das erste Areal (21) und welches innerhalb einer Außenumrandung des ersten Areals (21) angeordnet ist, miteinander durch Laserschweißen verschweißt werden.

11. Verfahren nach Anspruch 10, wobei die zu verschweißenden Komponenten (7) mehrere Metallfolien (37) sind.

12. Verfahren nach einem der Ansprüche 10 und 11, wobei die zu verschweißenden Komponenten (7) wenigstens eine Metallfolie (37) und wenigstens ein Metallblech (43) sind.

13. Verfahren nach einem der Ansprüche 10 bis 12, wobei zumindest eine Metallfolie (37) und/oder zumindest ein Metallblech (43) überwiegend aus Kupfer bestehen.

14. Verfahren nach einem der Ansprüche 12 und 13, wobei zum Laserschweißen Laserlicht mit einer Wellenlänge von weniger als 600 nm, vorzugsweise weniger als 500 nm, eingesetzt wird.

15. Verfahren nach einem der Ansprüche 10 bis 14,
wobei das Verfahren mittels einer Schweißeinrichtung (1) gemäß einem der Ansprüche 1 bis 9 durchgeführt wird.

## Claims

1. Welding device (1), comprising
an ultrasonic welding device (3),
a laser welding device (5), and
a control device (25),
wherein the welding device (1) is configured to weld at least two components (7) together in a first area (21) by means of the ultrasonic welding device (3) by ultrasonic welding and to weld the two components (7) during the ultrasonic welding in a second area (23) which is smaller than the first area (21), wherein the second area is arranged at least partially within an outer periphery of the first area (21) and/or adjacent to the outer periphery of the first area (21) with a lateral distance of less than 2 mm, by means of the laser welding device (5) by laser welding,
wherein the control device is configured to control the ultrasonic welding device to set the ultrasonic sonotrode to vibrate within a first time period and thereby weld the two components in the first area by means of ultrasound, and to control the laser welding device to weld the two components together locally in the second area within a second time period by emitting the laser beam, wherein the first time period and the second time period are simultaneous or at least overlap in time.

2. Welding device (1) according to claim 1,
wherein the ultrasonic welding device (3) has an ultrasonic sonotrode (9) and an anvil (11), wherein the ultrasonic sonotrode (9) and the anvil (11) are arranged opposite one another at a distance from one another and enclose a working volume (13) between them, in which at least two components (7) to be welded are to be arranged during ultrasonic welding,
wherein the laser welding device (5) has a laser (15) for emitting a laser beam (17), wherein the ultrasonic sonotrode (9) and/or the anvil (11) have a through opening (19) within a first area (21),
wherein the ultrasonic sonotrode (9) and the anvil (11) are configured to contact the two components (7) from opposite sides at contact surfaces during the ultrasonic welding in the first area (21) and to weld them together by ultrasonic welding, and
wherein the laser welding device (5) is configured to direct the laser beam (17) through the through opening (19) to a second area (23) on the two components (7) in order to additionally weld the two components (7) together by laser welding.

3. Welding device according to claim 2,
wherein the welding device (1) further comprises the control device (25) for controlling a synchronised operation of the ultrasonic welding device (3) and the laser welding device (5).

4. Welding device according to claim 3,
wherein the control device (25) is configured to perform the laser welding by activating the laser welding device (5), while the ultrasonic welding is performed by activating the ultrasonic welding device (3).

5. Welding device according to one of claims 2 to 4,
wherein the laser welding device (5) is configured to direct the laser beam (17) obliquely to the contact surface onto the second area (23).

6. Welding device according to one of claims 2 to 5,
wherein the through opening (19) is orientated obliquely to the contact surface.

7. Welding device according to one of claims 2 to 6
wherein the ultrasonic sonotrode (9) and/or the anvil (11) have a plurality of through openings (19', 19") within the first area (21), and
wherein the laser welding device (5) is configured to direct laser beams (17', 17") through each of the through openings (19', 19") to a plurality of second areas (23) on the two components (7) to complementarily weld the two components (7) together by laser welding.

8. Welding device according to one of the preceding claims,
wherein the laser welding device (5) is configured to emit the laser beam (17) for laser welding with laser light having a wavelength of less than 600 nm, preferably less than 500 nm.

9. Welding device according to one of the preceding claims,
wherein the laser welding device (5) is configured to emit laser light with a power of less than 3 kW for laser welding.

10. Method for welding at least two components (7), wherein the two components (7) are welded together by ultrasonic welding in a first area (21) and the two components (7) are welded together by laser welding during the ultrasonic welding in a second area (23) which is smaller than the first area (21) and which is arranged within an outer perimeter of the first area (21).

11. Method according to claim 10, wherein the components (7) to be welded are a plurality of metal foils (37).

12. Method according to one of claims 10 and 11, wherein the components (7) to be welded are at least one metal foil (37) and at least one metal sheet (43).

13. Method according to one of claims 10 to 12, wherein at least one metal foil (37) and/or at least one metal sheet (43) consist predominantly of copper.

14. Method according to one of claims 12 and 13, wherein laser light with a wavelength of less than 600 nm, preferably less than 500 nm, is used for laser welding.

15. Method according to any one of claims 10 to 14,
wherein the method is carried out by means of a welding device (1) according to any one of claims 1 to 9.

## Revendications

1. Dispositif de soudage (1), présentant :
un dispositif de soudage par ultrasons (3),
un dispositif de soudage au laser (5), et
un dispositif de commande (25),
dans lequel le dispositif de soudage (1) est configuré pour souder par ultrasons au moins deux composants (7) ensemble dans une première zone (21) à l'aide du dispositif de soudage par ultrasons (3) et pour souder les deux composants (7) ensemble par soudage au laser à l'aide du dispositif de soudage au laser (5), pendant le soudage par ultrasons, dans une deuxième zone (23) qui est plus petite que la première zone (21), laquelle deuxième zone est au moins partiellement disposée à l'intérieur d'une bordure extérieure de la première zone (21) et/ou adjacente, avec une distance latérale inférieure à 2 mm, à la bordure extérieure de la première zone (21),
dans lequel le dispositif de commande est configuré pour piloter le dispositif de soudage par ultrasons afin de faire vibrer la sonotrode à ultrasons pendant un premier laps de temps et de souder ainsi les deux composants dans la première zone au moyen d'ultrasons, et pour piloter le dispositif de soudage au laser afin de souder les deux composants ensemble localement dans la deuxième zone en émettant le faisceau laser pendant un deuxième laps de temps, le premier laps de temps et le deuxième laps de temps étant simultanés ou au moins se chevauchant dans le temps.

2. Dispositif de soudage (1) selon la revendication 1,
dans lequel le dispositif de soudage par ultrasons (3) présente une sonotrode à ultrasons (9) et une enclume (11), la sonotrode à ultrasons (9) et l'enclume (11) étant disposées en face l'une de l'autre à distance l'une de l'autre et enfermant entre elles un volume de travail (13) dans lequel au moins deux composants (7) à souder doivent être disposés pendant un soudage par ultrasons,
dans lequel le dispositif de soudage au laser (5) présente un laser (15) pour émettre un faisceau laser (17), dans lequel la sonotrode à ultrasons (9) et/ou l'enclume (11) présentent une ouverture de passage (19) à l'intérieur d'une première zone (21),
dans lequel la sonotrode à ultrasons (9) et l'enclume (11) sont configurées pour entrer en contact avec les deux composants (7) pendant le soudage par ultrasons dans la première zone (21) à partir de côtés opposés au niveau de surfaces de contact et pour les souder ensemble par soudage par ultrasons, et
dans lequel le dispositif de soudage au laser (5) est configuré pour diriger le faisceau laser (17) à travers l'ouverture de passage (19) vers une deuxième zone (23) sur les deux composants (7) afin de souder les deux composants (7) ensemble de manière complémentaire par soudage au laser.

3. Dispositif de soudage selon la revendication 2,
dans lequel le dispositif de soudage (1) présente en outre le dispositif de commande (25) pour commander un fonctionnement synchronisé du dispositif de soudage par ultrasons (3) et du dispositif de soudage au laser (5).

4. Dispositif de soudage selon la revendication 3,
dans lequel le dispositif de commande (25) est configuré pour réaliser le soudage au laser par activation du dispositif de soudage au laser (5), tandis que le soudage par ultrasons est réalisé par activation du dispositif de soudage par ultrasons (3).

5. Dispositif de soudage selon l'une des revendications 2 à 4,
dans lequel le dispositif de soudage au laser (5) est configuré pour diriger le faisceau laser (17) sur la deuxième zone (23) obliquement par rapport à la surface de contact.

6. Dispositif de soudage selon l'une des revendications 2 à 5,
dans lequel l'ouverture de passage (19) est orientée obliquement par rapport à la surface de contact.

7. Dispositif de soudage selon l'une des revendications 2 à 6,
dans lequel la sonotrode à ultrasons (9) et/ou l'enclume (11) présentent plusieurs ouvertures de passage (19', 19") à l'intérieur de la première zone (21), et
dans lequel le dispositif de soudage au laser (5) est configuré pour diriger des faisceaux laser (17', 17'') à travers chacune des ouvertures de passage (19', 19") sur plusieurs deuxièmes zones (23) sur les deux composants (7) afin de souder les deux composants (7) ensemble de manière complémentaire par soudage au laser.

8. Dispositif de soudage selon l'une des revendications précédentes,
dans lequel le dispositif de soudage au laser (5) est configuré pour émettre le faisceau laser (17) pour le soudage au laser avec une lumière laser ayant une longueur d'onde inférieure à 600 nm, de préférence inférieure à 500 nm.

9. Dispositif de soudage selon l'une des revendications précédentes,
dans lequel le dispositif de soudage au laser (5) est configuré pour émettre une lumière laser d'une puissance inférieure à 3 kW pour le soudage au laser.

10. Procédé pour souder au moins deux composants (7),
dans lequel les deux composants (7) sont soudés ensemble par soudage par ultrasons dans une première zone (21) et les deux composants (7) sont soudés ensemble par soudage au laser, pendant le soudage par ultrasons, dans une deuxième zone (23) qui est plus petite que la première zone (21) et qui est disposée à l'intérieur d'une bordure extérieure de la première zone (21).

11. Procédé selon la revendication 10,
dans lequel les composants (7) à souder sont plusieurs feuilles métalliques (37).

12. Procédé selon l'une des revendications 10 et 11, dans lequel les composants (7) à souder sont au moins une feuille métallique (37) et au moins une tôle métallique (43).

13. Procédé selon l'une des revendications 10 à 12,
dans lequel au moins une feuille métallique (37) et/ou au moins une tôle métallique (43) sont majoritairement en cuivre.

14. Procédé selon l'une des revendications 12 et 13,
dans lequel on utilise pour le soudage au laser une lumière laser ayant une longueur d'onde inférieure à 600 nm, de préférence inférieure à 500 nm.

15. Procédé selon l'une des revendications 10 à 14, lequel procédé est mis en œuvre au moyen d'un dispositif de soudage (1) selon l'une des revendications 1 à 9.
